# EUROPEAN PATENT APPLICATION

(11) **EP 3 542 947 A1**
(43) Date of publication of application: **25.09.2019**
(21) Application number: 17870771.7
(22) Date of filing: 09.11.2017
(51) Int. Cl.: B23K 26/53, B23K 26/073, B23K 26/361

(54) **PROCESSING METHOD, PROCESSING SYSTEM, AND PROCESSING PROGRAM**

(30) Priority: 16.11.2016 JP 2016223151
(71) Applicant: Roland DG Corporation, Shizuoka 431-2103 (JP)
(72) Inventor: MAEDA, Toshio, Hamamatsu-shi Shizuoka 431-2103 (JP)
(74) Representative: Grünecker Patent- und Rechtsanwälte PartG mbB
(86) International application number: PCT/JP2017/040379
(87) International publication number: WO 2018/092669

(57) **Abstract**

To provide machining methods with which objects can be obtained even when materials that are less transparent to light are used.

A machining method for machining a material using a laser, the method including: separating an object from inside the material by repeating a first machining step of forming a separation site for a certain domain inside the material by projection of the laser; and a second machining step of removing the certain domain of the material by separating, at the separation site, the material that has been subjected to the first machining step.

## Description

### Technical field

The present invention relates to machining methods, machining systems, and machining programs.

### Background art

Machining devices for milling materials, such as metals or plastics, to obtain a range of objects have been known. These machining devices have a plurality of drive shafts. For example, machining devices having five axes can fabricate objects with a complex shape by controlling the movement in the right-and-left (x-axis), forward-and-backward (y-axis), and up-and-down (z-axis) directions as well as the rotating movement around the x-axis (A-rotation axis) and the y-axis (B-rotation axis).

Dentistry prostheses are some examples of objects that can be fabricated using a machining device. Brittle ceramic materials such as zirconia or zirconia-containing ceramics are used as the material for such prosthesis. Fully sintered materials that are made of brittle ceramic materials are superior to those made of metal or plastic in terms of hardness, abrasion resistance, thermal resistance, corrosion resistance, among other properties.

On the contrary, since fully sintered materials made of brittle ceramic materials are very hard, their machining efficiency at the time of milling tends to be poor. Therefore, milling is typically performed on a block or a disk of a half-sintered material. For example, a half-sintered material is subjected to milling based on the machining data and then fired to obtain a fully sintered material. Then, after subjecting the fully sintered material to a finishing treatment such as polishing, a prosthesis is obtained (see Non-patent literature 1).

Technically, it is also possible to grind fully sintered materials made of brittle ceramic material (see Non-patent literature 2).

### [Related art documents]

### [Non-patent literatures]

[Non-patent literature 1] "Basic knowledge of zirconia and product report," [online], Yamakin, Co., Ltd., [retrieved on October 3, 2016], Internet <URL: http://www.yamakin-gold.co.jp/technical#support/webrequest/pd/zirconia.pdf>
[Non-patent literature 2] "C-Pro Nano-Zirconia Type F," [online], Pharmaceuticals and Medical Devices Agency, [retrieved on October 3, 2016], Internet <URL: http://www.info.pmda.go.jp/downfiles/md/PDF/730056/730056#221AABZX00156000#A#01#05.pd f>

Conventional machining methods, however, present a problem, i.e., it takes a long time to complete the formation of each prosthesis.

For example, with the machining method of Non-patent literature 1, it takes approximately 7 to 15 hours to fire half-sintered materials after milling. In addition, machining by the machining method of Non-patent literature 1 requires the exchange of cutting tools depending on the shape of the prosthesis to be formed, so the machining times may be even longer.

When the machining method of Non-patent literature 2 is used, since the fully sintered materials exhibit high hardness as described above, it takes a long time to completely form the prostheses.

Furthermore, conventional machining methods present a problem, i.e., they pose difficulties in ensuring machining precision.

For example, when using the machining method of Non-patent literature 1, shrinkage or warping of the material can occur upon firing. Therefore, machining data that takes account the degree of shrinkage and warping is usually prepared. However, because the position and degree of contraction and warping differ depending on, for example, the shape of each prosthesis, the type of the material, or the machining temperature, it is difficult to prepare the machining data fully predicting contraction or warping. In other words, it is difficult to ensure sufficient machining precision for the prostheses. In addition, in the machining method of Non-patent literature 1, since the cutting and the firing processes are performed by separate devices, the material has to be positioned with respect to the device twice or more, resulting in a potential decrease of the machining precision.

Furthermore, in either Non-patent literature 1 or 2, machining requires keeping the tools for cutting or grinding directly in contact with the material. Therefore, the machining precision may be deteriorated owing to the force exerted on the material or tool as a result of the contact.

As a solution to solve this problem, machining methods for forming an object inside a material using a laser can be contemplated.

Besides, materials that are less transparent to light (e.g., strongly scattering materials and polycrystalline materials) are used in some cases depending on, for example, the kinds of objects. When such materials are subjected to laser machining, the laser that is incident to the surface of the material cannot reach the surface of an object, resulting in a possible failure in forming an object inside the material.

An object of the present invention is to provide machining methods, machining systems for implementing these machining methods, and machining programs executed in the machining systems with which objects can be obtained even when materials that are less transparent to light are used.

### Summary of the invention

One invention to achieve the aforementioned object is a machining method for machining a material using a laser, the method including: separating an object from inside the material by repeating a first machining step of forming a separation site for a certain domain inside the material by projection of the laser; and a second machining step of removing the certain domain of the material by separating, at the separation site, the material that has been subjected to the first machining step.

In addition, another invention to achieve the aforementioned object is a machining system for machining a material using a laser, the system including: a projection unit that projects the laser; a holding unit that holds the material; a driving mechanism that moves the projection unit and the holding unit relative to each other; and a control unit that controls the projection unit and the driving mechanism such that the projection unit and the driving mechanism repeats, in order to separate an object from inside the material, a process of forming a separation site for a certain domain inside the material by projection of the laser; and a process of removing the certain domain of the material by separating the material at the separation site.

Furthermore, yet another invention to achieve the aforementioned object is a machining program executed in a machining system for machining a material using a laser, the program causing the machining system to: repeat, in order to separate an object from inside the material, a process of forming a separation site for a certain domain inside the material by projection of the laser; and a process of removing the certain domain of the material by separating the material at the separation site.

Other features of the present invention are disclosed in the description of the specification.

### Effect of the invention

According to the present invention, objects can be obtained even when materials that are less transparent to light are used.

### Brief description of the drawings

Fig. 1A is a diagram showing an outline of a machining method according to an embodiment;
Fig. 1B is a diagram showing an outline of the machining method according to the embodiment;
Fig. 1C is a diagram showing an outline of the machining method according to the embodiment;
Fig. 2 is a diagram schematically showing a configuration of a machining system according to the embodiment;
Fig. 3A is a diagram schematically showing a material in the embodiment;
Fig. 3B is a diagram schematically showing the material in the embodiment;
Fig. 3C is a diagram schematically showing the material in the embodiment;
Fig. 4 is a flowchart showing an operation of the machining system according to the embodiment;
Fig. 5A is a diagram schematically showing the material in the embodiment;
Fig. 5B is a diagram schematically showing the material in the embodiment;
Fig. 5C is a diagram schematically showing the material in the embodiment;
Fig. 5D is a diagram schematically showing the material in the embodiment; and
Fig. 6 is a diagram schematically showing a material according to the other.

### Detailed description of the invention

In the descriptions of the specification and the drawings that follow, at least the following features are disclosed in addition to the aforementioned main invention.

Furthermore, the machining method including a third machining step of polishing, with the laser, the object that has been separated from inside the material is disclosed. According to such machining method, it is possible to obtain objects with higher machining precision.

Furthermore, the machining method in which a spot diameter for the laser projected in the third machining step is smaller than a spot diameter for the laser projected in the first machining step and a spot diameter for a laser projected in the second machining step is disclosed. According to such machining method, it is possible to obtain objects with higher machining precision.

### == Overview of embodiment ==

In a machining method according to this embodiment, materials are machined using a laser. Projecting a laser towards a material makes machining of these materials possible without any contact.

Materials used in this embodiment are less transparent to light (lasers) (have a low light transmittance). In this embodiment, the phrase "less transparent to light" means that the light that is incident to the surface of a material cannot reach the surface of an object to be formed inside the material.

Specific examples of the materials that can be used include ceramic-based (e.g., zirconia) strongly scattering materials and polycrystalline materials. These materials may be composite materials such as zirconia-containing glass ceramics or zirconia alone.

Furthermore, the materials used in the machining method according to this embodiment are fully sintered materials. Since these materials do not require sintering after machining, the time required for machining can be shortened. Moreover, the fully sintered materials are immune to contraction, which otherwise may be caused by firing, so machining precision is not deteriorated.

As for lasers, ultrashort laser pulses are used. Ultrashort laser pulses are a kind of pulses with durations of picoseconds to femtoseconds. Ablation (nonthermal machining) can be performed by exposing a certain position inside the material with ultrashort laser pulses for a short time. In ablation, the portion of material molten by the laser instantaneously evaporates and scatters, thus being eliminated, such that damage to the ablated portion due to heat is lower than with typical laser machining (thermal machining). Ablation is particularly effective for machining objects with a small size, such as dentistry prostheses.

Projection of the laser towards materials is performed towards positions corresponding to a machining data (described later) that has been prepared beforehand. Materials used in this embodiment are less transparent to lasers as described above. Accordingly, it is impossible for lasers to directly reach the surface of an object through the surface of each material. Taking this into consideration, the machining method according to this embodiment separates an object from inside the material by repeating a first machining step of forming a separation site for a certain domain inside the material by projection of the laser and a second machining step of removing the certain domain of the material by separating, at the separation site, the material that has been subjected to the first machining step, by the number of times equal to the number of the certain domains.

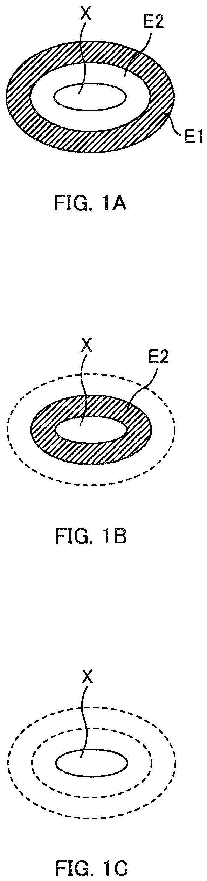

Figs. 1A to 1C are diagrams for use in describing a general outline of a machining method according to this embodiment. Figs. 1A to 1C show an object X in a material and layer portions outside the object X. In Figs. 1B and 1C, outer surfaces of the layer portions that have already been removed are indicated by broken lines. In addition, the outer surface of the outermost first layer portion E1 coincides with the surface of the material.

In the machining method according to this embodiment, first, separation sites are formed in the first layer portion E1 by projection of a laser from the surface (the outer surface of the first layer portion E1) of a material and the first layer portion E1 of the material is removed by separation (see Fig. 1A). Next, separation sites are formed in a second layer portion E2 by projection of a laser from the outer surface of the second layer portion E2 and the second layer portion E2 of the material is removed by separation (see Fig. 1B). In this way, the formation of the separation sites and the separation are performed for each layer portion inside the material to remove the portion of the material present outside the object X, thereby separating the object X from inside the material (see Fig. 1C). Details of the formation of the separation sites and the separation are described later.

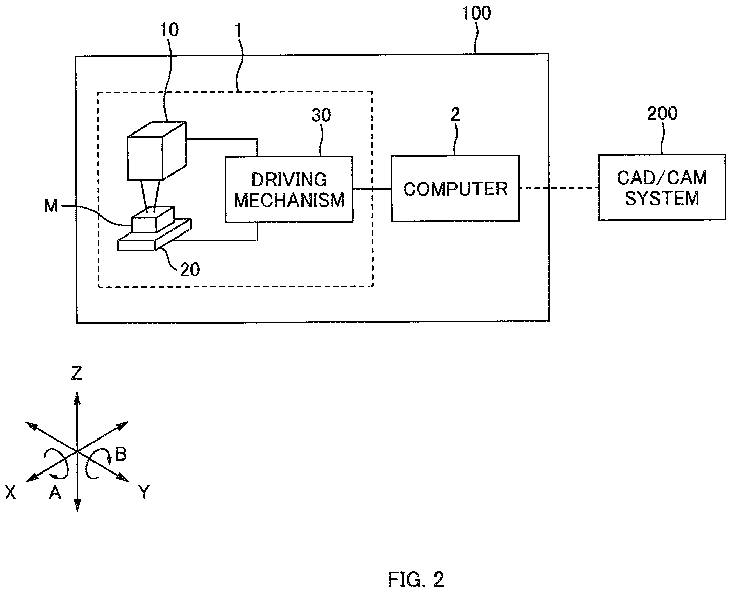

The machining method according to this embodiment is performed by a machining system 100 as shown in Fig. 2. The machining system 100 machines materials by executing a machining program generated by a CAD/CAM system 200. Hereinafter, a "machining data," a "machining system," and a "machining using a machining system (machining method)" are described in detail.

### == Machining data ==

The machining data is used by the machining system 100 for fabricating objects. The machining data is generated in the CAD/CAM system 200 according to each three-dimensional data of an object and each three-dimensional data of a material. For example, when fabricating dentistry prostheses, a machining data is generated using three-dimensional data obtained by scanning the inside of the oral cavity with a CCD camera or an X-ray CT. The three-dimensional data of each object is STL data or solid data used in three-dimensional CAD, or data such as 3 MF or AMF used in 3D printers.

The machining data according to this embodiment includes at least a contour data, a boundary data, and a separation data.

The contour data represents a surface contour of an object. The contour data consists of, for example, a plurality of point data along the surface contour of the object. Each point data has three-dimensional (x, y, and z) coordinates and normal vector information. The coordinates are used in determining the boundary between the object and the remainder (the material to be removed). The normal vector information is used in forming a boundary data. The point data can be determined at regular distances along the contour of the object or the point data can be spaced apart at different distances for the shape of each object.

The boundary data represents a boundary between certain domains inside the material. The boundary data is set for the three-dimensional data representing the shape of a certain material. The boundary data is comprised of a group of coordinates determined by extending the coordinates of each point (or a local surface including some points) included in the contour data for the object by a certain amount in the direction of the normal. This group of coordinates corresponds to a boundary between certain domains. In other words, a domain enclosed between a certain boundary and another boundary outside (inside) corresponds to the certain domain. The certain domain is located outside the object in the material. The thickness of one certain domain (the aforementioned certain amount) has a value up to such a distance that the projected laser can transmit and is determined depending on, for example, the kind and properties of the material. A separation site based on the separation data is formed in each certain domain.

In cases where an object has a complex shape (e.g., with a rugged surface), if a boundary data is generated based on the contour data of the object, the shape of the certain domain becomes complex. This can present some problems, i.e., the formation of separation data is difficult, or the actual machining operation requires a long machining time. Thus, in such cases, a simple envelope including the object is generated and a plurality of point data (having at least three-dimensional (x, y, and z coordinates and normal vector information) along the surface contour of the envelope are constituted. Then, it is possible to form a boundary by extending the coordinates of each point data by a certain amount in the direction of the normal. The envelope can be determined by smoothing (curving) only portions having a rugged surface in the contour data of the object, or alternatively, by selecting a shape in which the object can be enclosed among, for example, pre-registered basic shapes (e.g., spheres, cones, and cylinders), polyhedrons, and semi-polyhedrons. When an envelope is determined, the object separated from inside the material has a shape that is different from its intended shape. In such cases, by performing a finishing operation (described later) according to the contour data of the object, the object with the intended shape can be obtained.

The separation data represents a separation site in a certain domain. The separation data is set for a three-dimensional data representing the shape of a certain material. The separation site is used as a reference in separating the material. In order to facilitate the separation, it is preferable that two or more separation sites are formed for each certain domain. Each separation site can be a planar area or comprised of a plurality of line segments. The separation site may be designated based on one or more patterns that have been prepared beforehand or any site on a three-dimensional data of the material may be designated at the time of generating the machining data.

In this embodiment, each separation data is comprised of a plurality of point data and information indicating the certain domain in which the point data are included. Each point data has at least three-dimensional coordinates and vector information. The coordinates are used in determining positions at which the laser is focused (i.e., the coordinates correspond to the positions to which the laser is projected inside the material). The vector information is used in determining the direction of the laser to be projected. It should be noted that the separation data need not be a plurality of point data as long as it is a data capable of forming a separation site inside the material. For example, it may be a data for setting a range (position and width) over which the laser is projected towards the material.

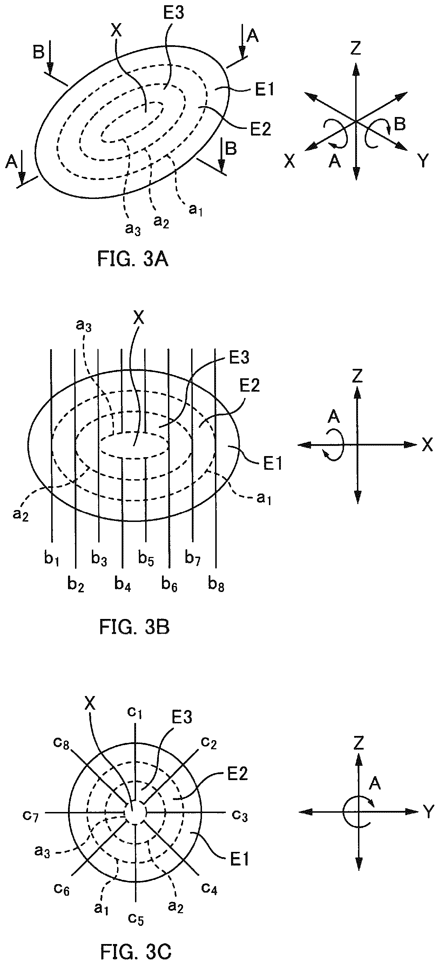

Referring to Figs. 3A to 3C, examples of an object inside a material, certain domains (boundaries), and separation sites are described. Figs. 3A to 3C are diagram schematically showing an object inside a material, certain domains (boundaries), and separation sites. In Figs. 3A to 3C, the longitudinal direction of the material is defined as the x-direction and the directions perpendicular to the longitudinal direction are defined as y- and z-directions. In addition, the material has rotation axes (the A- and B-rotation axes) around the x- and y-axes, respectively. The rotation axes of the material can be determined beforehand at the time of generating a machining data according to, for example, the shape of the material. Fig. 3A is a perspective view of the material. Fig. 3B is a cross-sectional view taken along the line A-A in Fig. 3A. Fig. 3C is a cross-sectional view taken along the line B-B in Fig. 3A. In Fig. 3A, the separation sites are omitted.

In this example, it is assumed that three certain domains (first through third layer portions E1 to E3) are present around an object X. Each of the first through third layer portions E1 to E3 is an example of the "certain domain." In addition, in this example, the surface of the material coincides with the outer surface of the first layer portion E1 (the outer surface of the first layer portion E1 contours the shape of the material).

Each of the first through third layer portions E1 to E3 is defined by the coordinates corresponding to the surface of the material and the coordinates based on the boundary data. Specifically, the first layer portion E1 is defined by the coordinates corresponding to the surface of the material and the coordinates corresponding to a boundary a₁ with and the second layer portion E2. The second layer portion E2 is defined by the coordinates corresponding to the boundary a₁ with the first layer portion E1 and the coordinates corresponding to a boundary a₂ with the third layer portion E3. The third layer portion E3 is defined by the coordinates corresponding to the boundary a₂ with the second layer portion E2 and a boundary a₃ with the object M (surface contour of the object M).
separation sites are formed in each of the first through third layer portions E1 to E3 to separate each layer portion. Each layer portion is defined in such a way as covering the entire surface of the object X (or an inner layer portion). Accordingly, in order to remove each layer portion, it is preferable that each layer portion is divided into small pieces.

In this example, as the separation sites, planes perpendicular to the x-axis (separation planes bₙ; n is a natural number and n is one of 1 to 8 in this example) are formed with being away from each other at any distances defined along the x-direction (see Fig. 3B). In addition, as the separation sites, a plurality of planes (separation planes cₙ; n is a natural number and n is one of 1 to 8 in this example) extending radially outward from the center (the axial center of the A-axis) of the material as seen from the x-direction are formed (see Fig. 3C). Each layer portion is divided into a plurality of pieces by such separation sites. In this embodiment, each piece is an example of the "certain domain." It should be noted that no separation site (separation plane) is formed in the portion corresponding to the object X as can be seen from Figs. 3B and 3C.

In consideration of machining efficiency, it is preferable that the separation site is flat (separation plane) passing through all layer portions as shown in Figs. 3B and 3C. On the other hand, it is possible to form separation sites at different positions from layer portion to layer portion. In addition, different layer portions may have different number of separation sites.

The machining data may include data for use in finishing (polishing) or the like after the separation. In addition, the machining data may include information about laser output (spot diameter of the laser projected to each point, projection time, intensity, etc.).

The CAD/CAM system 200 supplies the generated machining data to the machining system 100. The machining system 100 is for machining materials by projecting the laser to the positions corresponding to the machining data. The format of the supplied data is not limited as long as the data can be used in the machining system 100.

### == Machining system ==

Fig. 2 is a diagram schematically showing the machining system 100. The machining system 100 includes a machining device 1 and a computer 2. The machining system 100, however, can be formed by a machining device 1 alone when the functions of the computer 2 are integrated into the machining device 1.

The machining device 1 according to this embodiment has five driving axes (the x-, y-, and z-axes as well as the A-rotation axis (the rotation axis around the x-axis) and B-rotation axis (the rotation axis around the y-axis). The machining device 1 machines materials by projecting the laser to the positions corresponding to the machining data. The machining device 1 includes a projection unit 10, a holding unit 20, and a driving mechanism 30.

The projection unit 10 is for projecting a laser towards materials. The projection unit 10 comprises a laser oscillator and an optical system including a group of lenses and the galvanometer mirror for directing the laser produced by the oscillator to each material.

The holding unit 20 is for holding a material M. Any method can be used for holding the material as long as the material being held can be moved along and rotated around one of the five axes. For example, it is possible to use a method of clamping and holding a disk-shaped material with a clamp as in the case of milling using a conventional five-axis machining device or a method of bonding a metal pin to a block-like material and inserting the pin into the holding unit 20 to hold the material.

The driving mechanism 30 moves the projection unit 10 and the holding unit 20 relative to each other. The driving mechanism 30 has a driving motor and the like.

The computer 2 controls operations of the projection unit 10 and the driving mechanism 30. Specifically, the computer 2 controls the driving mechanism 30 to adjust the relative position between the projection unit 10 and the holding unit 20 (the material M) such that the laser can be projected to the positions corresponding to the machine data inside the material. Furthermore, the computer 2 controls the projection unit 10 to adjust the positions at which the laser is focused, the spot diameter of the projected laser, intensity and the like or projects the laser toward the material M for a certain period of time. The spot diameter, intensity, projection time and the like affect the output (energy) of the projected laser. These values may be integrated into the machining data beforehand as mentioned above or may be set on the machining device 1 side. Furthermore, in determining these values, the type and properties of the material to be machined may be taken into consideration. The computer 2 is an example of the "control unit."

In the machining system 100 according to the present embodiment, it is also possible to perform separation and finishing as well as the formation of the object and the separation sites by adjusting the output of the laser produced from the projection unit 10. That is, since all processes for obtaining the object from the material M can be performed by the machining device 1, there is no potential decrease of the machining precision due to attachment and detachment of the material M.

### == Machining using machining system ==

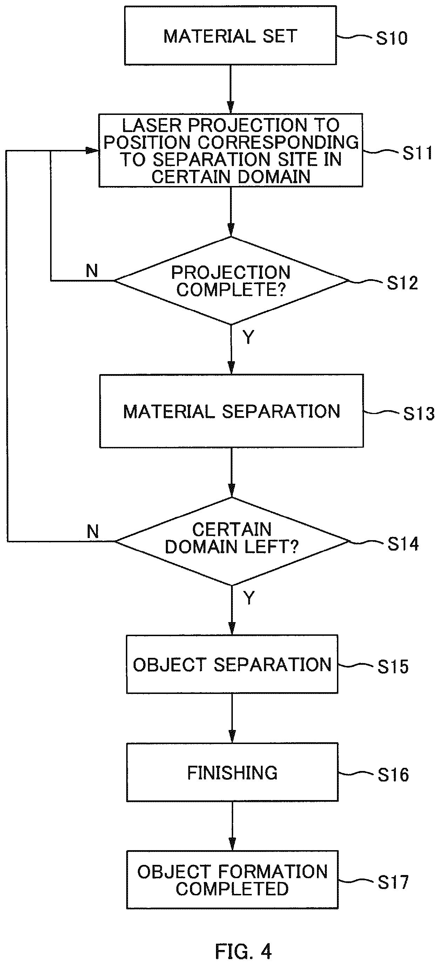

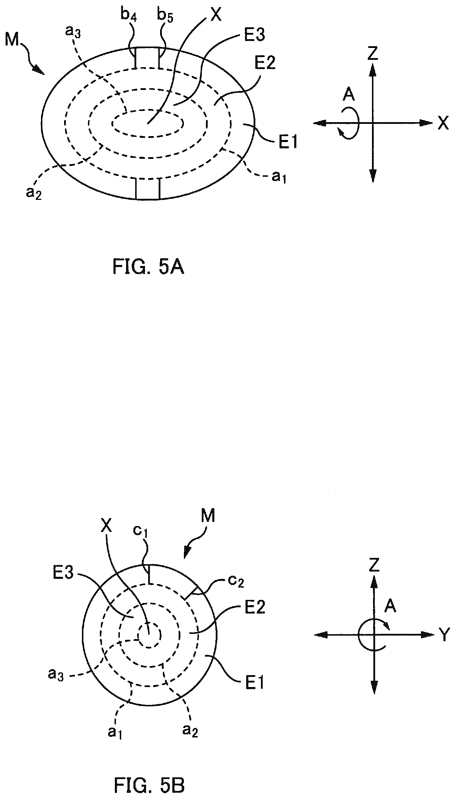

Next, referring to Figs. 4 to 5H, a specific example of the machining method according to the present embodiment is described. Here, an example in which the machining method is performed by the machining system 100 is described. In this example, the material M is to be machined to obtain an object X. Fig. 4 is a flowchart illustrating an operation of the machining system 100. Figs. 5A to 5H are diagrams showing the material M being machined. It is assumed that a machining data of the object X is generated beforehand by the CAD/CAM system 200.

The material M to be used for machining the object X is selected and set to the holding unit 20 of the machining device 1 (material set; step 10). It is preferable that the selected material M has a shape corresponding to the one represented by the three-dimensional data of the material used in generating the machining data (separation data). However, the selected material M may have any shape as long as it encompasses at least the object X.

The computer 2 makes the machining device 1 perform machining of the material M according to the machining data of the object X.

First, the computer 2 makes a laser be projected to a position corresponding to a separation site in a certain domain according to a separation data included in the machining data (laser projection to a position corresponding to a separation site in a certain domain; step 11).

The computer 2 performs adjustment in such a manner that a position at which the laser is focused matches the coordinates of a point data included in the separation data. Specifically, the computer 2 adjusts a relative position between the projection unit 10 and the driving mechanism 30 and adjusts orientations and angles of a group of lenses and the galvanometer mirror of the projection unit 10. The position at which the laser is focused is adjusted in consideration of the refractive index of the material M. After the position at which the laser is focused has matched the coordinates of the point data, the computer 2 controls the projection unit 10 and makes it project the laser from a position on a normal based on the normal information included in the point data for a certain period of time. By projecting the laser from a position on a normal, it is possible to increase energy efficiency of the laser exerted on the machined portion.

The computer 2 successively projects a laser according to the point data included in the separation data. The material has, at the position where the laser has been projected (machined portion), a crater which size depends on the spot diameter of the laser. Such process of forming a separation site by projecting the laser to the inside of the material M is an example of the "first machining step." Projection of the laser may be achieved by alternating the positioning and emission or if the position of the focal point does not change, machining may be performed successively for adjacent positions corresponding to the point data while the laser is being projected in consideration of machining efficiency.

Here, in the certain domain, when the projections of the laser to the positions corresponding to all of the point data included in the separation data have been completed (Y in step 12), a separation site has been formed in the certain domain inside the material M.

After the separation site has been formed in the certain domain, the computer 2 makes the material M be separated at the separation site (material separation; step 13). Such process of separating the material M is an example of the "second machining step."

Regarding the method of the separation, various methods can be used depending on the type and physical properties of the material.

For example, it is possible to use a method of projecting, to a boundary between certain domains, a laser with a power equivalent to that used in ordinary thermal processing (higher power as compared to that in the steps including the step 11), thereby applying impact by heating to the material M to separate it. In this case, the projection unit 10 can be used as it is.

Alternatively, it is also possible to separate the object by providing the machining system 100 with a dedicated configuration for separation.

For example, a structure for injecting gas refrigerant for cooling or dry ice is provided. It is possible to separate the material M by injecting a gas refrigerant or the like to rapidly cool it. Alternatively, ultrasonic vibrations may be applied to the material M by a horn that generates ultrasonic waves to separate the material M or a force may be directly exerted on the material M by a hammer or the like to separate the material M (a method using physical interference).

Furthermore, the aforementioned methods may be used in combination for performing the separation. For example, a notch is formed by projecting a laser to a portion of a boundary between certain domains. Then, separation can be induced from the notch by directly applying a force to the material M.

Using these methods, the certain domain of the material with the separation sites formed can be removed.

Whether or not the certain domain of the material has been removed may be measured and monitored using a CCD camera or an image processing device provided in the machining system 100. In the case where the certain domain of the material has not yet been completely removed, the aforementioned separation method may be performed twice or more, or two or more methods may be combined to induce the separation. Alternatively, the machining system 100 may perform a processing of adding a new separation site and perform operations of formation of the separation site and separation.

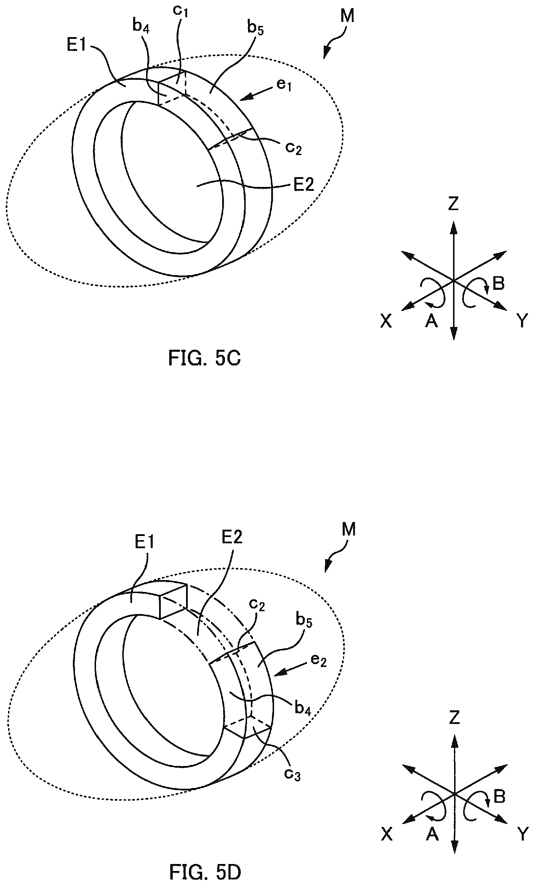

Now, referring to Figs. 3A and 5A to 5D, a specific example of the operations in the steps 11 to 13 is described. Fig. 5A is a cross-sectional view taken along the line A-A in Fig. 3A. Fig. 5B is a cross-sectional view taken along the line B-B in Fig. 3A. Figs. 5C and 5D are perspective views of the material M. In this example, described is an example in which a single layer portion is completely removed by repeating an operation of dividing the single layer portion into small pieces with separation sites (operation of forming the separation sites) and an operation of separating the divided pieces.

The computer 2 makes a laser be projected onto the first layer portion E1 to form a separation plane b₄ and a separation plane b₅ around the entire periphery about the A-axis (see Fig. 5A). In addition, the computer 2 makes a laser be projected onto the first layer portion E1 to form a separation plane c₁ and a separation plane c₂ (see Fig. 5B). Thereafter, the computer 2 makes a laser be projected onto the boundary a₁ to separate a portion e₁ surrounded by the separation planes b₄, b₅, c₁, and c₂ (see Fig. 5C). Using this series of operations, the portion e₁ of the material can be removed (see Fig. 5D; the portion e₁ is indicated by dash-dot lines).

Next, the computer 2 makes a laser be projected onto the first layer portion E1 to form a separation plane c₃. Then, the computer 2 makes a laser be projected onto the boundary a₁ to separate a portion e₂ surrounded by the separation planes b₄, b₅, c₂, and c₃ (see Fig, 5D). Using this series of operations, the portion e₂ of the material can be removed. By repeating similar operations about the A-axis, the portion of the material corresponding to the range of the separation planes b₄ and b₅ can be removed from the first layer portion E1.

Furthermore, by performing similar operations entirely in the x-direction, it is possible to remove the whole first layer portion E1. These operations can also be performed for the second layer portion E2 and the third layer portion E3.

It should be noted that the specific example of the machining operation described herein is an example and the present invention is not limited to the aforementioned operation as long as separation sites can be formed in a certain domain located outside an object and the material can be removed by separation. For example, in the example in Fig. 3A and other figures, by projecting a laser onto the boundary a₁ after the separation planes b₁ to b₈ and the separation planes c₁ to c₈ are formed (after all separation planes are formed in a certain domain at the beginning), the entire first layer portion E1 can be separated at once.

Returning to Fig. 4, after the step 13, if another certain domain is left around the object X (Y in step 14), the computer 2 makes the machining system 100 perform the operations of the steps 11 through 13. By removing all certain domains of the material present around the object X, it is possible to separate the object X from inside the material (object separation; step 15).

Depending on the density of the positions at which lasers are focused, the state of laser projection, conditions of separation, or other factor, a part of the material M can be left on the surface of the separated object X with irregularities on the surface of the object X. Therefore, from the viewpoint of increasing precision of object machining, it is more preferable to perform finishing.

In this case, the computer 2 performs finishing by polishing the object X separated in the step 15 with a laser (finishing, step 16). The method of finishing (polishing method) is not particularly limited. For example, because the contour data included in the machining data follows the contour of the object X, the laser is projected again according to contour data. If a part of the material M is left on the surface of the object X obtained in the step 15, the remaining material M is removed by the projection of the laser in the step 16. Accordingly, it is possible to obtain the object X with higher machining precision. The step of polishing the separated object X with a laser is an example of the "third machining step."

Although laser polishing has been described as an example of finishing, mechanical polishing like those used conventionally may be performed. Furthermore, by providing a dedicated configuration in the machining system 100, it is possible to perform dyeing or glazing as finishing.

As described above, in the machining method according to this embodiment, it is possible to remove the certain domains of the material by forming the separation sites by projection of the laser to the certain domains and separating the material. By repeating these operations, an object can be separated from inside the material. That is, even when the material has a low light transmittance and objects cannot be formed directly inside the material, objects can be obtained.

Furthermore, the machining method according to this embodiment allows separation materials to be performed per certain domain. This eliminates the necessity of laser ablation of the whole material outside the object. In other words, according to the machining method of this embodiment, time required for machining can be shortened.

Moreover, since fully sintered materials are subjected to machining using lasers, it is unnecessary to take times for post-treatment such as firing which is required in conventional machining methods. In addition, in the machining method according to the present embodiment, since fully sintered materials are subjected to machining, it is unnecessary to take contraction owing to firing into consideration. Moreover, since objects can be machined in a single machining device, no alignment etc. is required once the material used has been set. Consequently, with the machining method of this embodiment, objects can be obtained with high machining precision.

### = Others =

Furthermore, the polishing in the finishing step (third machining step) needs to be performed more precisely in order to reproduce the three-dimensional shape of each object. Therefore, the controller 2 can also control projection unit 10 in such a way that a spot diameter for the laser projected in the third machining step is smaller than spot diameters for the laser projected in the first and second machining steps.

In the above embodiment, an example in which all machining processes are performed in the machining system 100 has been described. In the present invention, however, it is not intended to exclude a mode in which the operation of forming an object and one or more separation sites and the operation of separation are performed with different devices. Even when the machining method according to the present invention is performed using two or more devices in a manner as mentioned just above, it is possible to shorten the time required for machining and increase machining precision at least as compared to those obtained using conventional machining methods.

In the above embodiment, an example in which all machining processes are performed in the machining system 100 has been described. In the present invention, however, it is not intended to exclude a mode in which the operation of forming one or more separation sites and the operation of separation are performed with different devices. Even when the machining method according to the present invention is performed using two or more devices in a manner as mentioned just above, it is possible to obtain an object from a material having a low light transmittance.

Although an example in which a block-shaped material M is subjected to machining has been described in the above embodiment, the material M is not limited thereto. According to the machining method of the above embodiment, it is also possible to form asymmetric shapes such as bridge-shaped members and dentures that can machine two or more teeth from a single member.

In the aforementioned embodiment, an example in which the formation of the separation sites and separation are performed successively from the outer certain domain to the inner one has been described. The order of removing the certain domains of the material, however, is not limited to this. For example, after the separation of a portion of a given certain domain, a portion of an inner certain domain (the position where a laser can reach as a result of the removal of the outer certain domain) may be separated before the separation of the other portion of the outer certain domain.

For example, as shown in Fig. 5C, it is assumed that the portion e₁ surrounded by the separation planes b₄, b₅, c₁, and c₂ in the first layer portion E1 is separated at the boundary a₁. Thereafter, a laser is directly projected to the second layer portion E2 through the separated part (where the portion e₁ has been removed) before another portion of the first layer portion E1 (such as the portion e₂ shown in Fig. 5D) is separated to form the separation planes b₄, b₅, c₁, and c₂. Then, separation can be made at the boundary a₂.

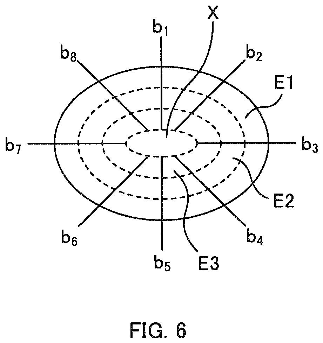

Furthermore, for the purpose of facilitating the separation, it is desirable that there are as few connections as possible with portions to be separated. Thus, for example, as shown in Fig. 6 (a figure corresponding to the cross-section taken along the line A-A in Fig. 3A), a plurality of separation planes bₙ can be formed radially outward from the center of the material, as in the separation planes cₙ.

Needless to say, the machining method according to the aforementioned embodiment can be applied to materials that are highly transparent to light.

It is also possible to supply a program to a computer using a non-transitory computer readable medium with the machining program in the above embodiment stored therein. Examples of the non-transitory computer readable medium include magnetic storage media (e.g. flexible disks, magnetic tapes, and hard disk drives), and CD-ROMs (read only memories).

The above embodiment is provided as an example of the invention and does not limit the scope of the invention. Various omissions, substitutions, and changes can be made to the above configuration without departing from the subject matter of the invention. The above embodiment and modifications thereof are included in the scope and spirit of the invention as well as within the invention recited in the claims and equivalents thereof.

### Denotation of symbols

- 1: machining device
- 2: computer
- 10: projection unit
- 20: holding unit
- 30: driving mechanism
- 100: machining system

## Claims

1. A machining method for machining a material using a laser, the method comprising:
separating an object from inside the material by repeating
a first machining step of forming a separation site for a certain domain inside the material by projection of the laser; and
a second machining step of removing the certain domain of the material by separating, at the separation site, the material that has been subjected to the first machining step.

2. The machining method according to Claim 1, further comprising:
a third machining step of polishing, with the laser, the object that has been separated from inside the material.

3. The machining method according to Claim 2, wherein a spot diameter for the laser projected in the third machining step is smaller than a spot diameter for the laser projected in the first machining step and a spot diameter for a laser projected in the second machining step.

4. A machining system for machining a material using a laser, the system comprising:
a projection unit that projects the laser;
a holding unit that holds the material;
a driving mechanism that moves the projection unit and the holding unit relative to each other; and
a control unit that controls the projection unit and the driving mechanism such that the projection unit and the driving mechanism repeats, in order to separate an object from inside the material, a process of forming a separation site for a certain domain inside the material by projection of the laser; and a process of removing the certain domain of the material by separating the material at the separation site.

5. A program executed in a machining system for machining a material using a laser, the program causing the machining system to:
repeat, in order to separate an object from inside the material, a process of forming a separation site for a certain domain inside the material by projection of the laser; and a process of removing the certain domain of the material by separating the material at the separation site.
